# FASCICULE DE BREVET EUROPEEN

(11) **EP 1 169 955 B1**
(45) Date de publication et mention de la délivrance du brevet: **18.08.2004**
(21) Numéro de dépôt: 01401661.2
(22) Date de dépôt: 22.06.2001
(51) Int. Cl.: A47J 27/21, A47J 36/10

(54) **Dispositif de verrouillage de couverde**
Deckelverriegelungsvorrichtung
Lid locking device

(30) Priorité: 26.06.2000 FR 0008178
(43) Date de publication de la demande: 09.01.2002
(73) Titulaire: SEB S.A., 69130 Ecully (FR)
(72) Inventeur: Gourand, Thierry, 39700 Orchamps (FR)
(74) Mandataire: de Roquemaurel, Bruno

(56) Documents cités:
- DE-U- 29 521 376
- DE-U- 29 610 394
- DE-U- 29 703 089
- US-A- 4 513 877
- US-A- 5 033 162

## Description

La présente invention concerne la commande de l'ouverture et de la fermeture d'un récipient fermé par un couvercle.

Elle s'applique notamment, mais non exclusivement, aux bouilloires électriques ou aux appareils de chauffage de liquides, comportant un récipient muni d'une poignée de maintien du récipient, d'un bec verseur et d'une ouverture supérieure de remplissage qui peut être fermé par un couvercle articulé.

D'autres applications peuvent être envisagées dans le domaine du petit électroménager, notamment un couvercle articulé sur un réservoir porte-filtre d'une cafetière, ce réservoir porte-filtre étant prévu pour recevoir la mouture de café.

Dans ce domaine, il existe différents types de fermeture de récipients par l'intermédiaire d'un couvercle dont l'ouverture et la fermeture sont actionnés par un bouton poussoir.
On connaît par exemple un appareil comportant un bouton poussoir monté sur le cache de la poignée, un mécanisme de verrouillage étant monté au niveau du bec verseur. Pour obtenir le déverrouillage et l'ouverture du couvercle, le mécanisme de verrouillage doit se désolidariser du couvercle, ce qui implique un grand nombre de pièces mises en jeu. Un tel mécanisme est donc complexe et coûteux à fabriquer.

Ce mécanisme peut toutefois être simplifié en montant le mécanisme de verrouillage du couvercle au niveau de l'axe d'articulation de celui-ci. Toutefois, cette solution offre un niveau de sécurité inférieur à la solution précédente, dans la mesure où un renversement accidentel du récipient peut provoquer l'ouverture du couvercle au niveau du bec verseur, du fait que le verrouillage se situe au niveau de l'axe d'articulation du couvercle.

Il existe également une solution très simplifiée dans laquelle le bouton poussoir d'actionnement de l'ouverture et de la fermeture du couvercle est disposé sur la poignée, le verrouillage du couvercle étant effectué au niveau de l'axe d'articulation du couvercle. Toutefois, cette solution ne permet pas une ouverture totale du couvercle, ce qui est gênant notamment pour le nettoyage du récipient.

Une autre solution consiste à monter le bouton poussoir sur un ressort dans le couvercle. Cette solution implique que les forces de rappel respectives des ressorts du bouton poussoir et du ressort d'ouverture du couvercle soient calibrées de manière à, ce que la force de rappel du couvercle soit supérieure à celle exercée sur le bouton poussoir. En outre, lors de la fermeture, si l'utilisateur laisse le doigt sur le bouton, le couvercle ne se bloque pas en position fermée.

Le document DE-29610394 décrit les caractéristiques techniques citées dans le préambule de la revendication 1.

La présente invention a pour but de supprimer ces inconvénients. A cet effet, elle propose un couvercle de fermeture d'un récipient, articulé sur celui-ci, et comprenant des moyens élastiques de rappel du couvercle en position ouverte et des moyens de maintien pour être maintenu en position fermée sur le récipient.

Le couvercle comprend un mécanisme de verrouillage pour être maintenu en position fermée sur le récipient et un bouton de commande du mécanisme de verrouillage.

Selon l'invention, ce couvercle est caractérisé en ce que le mécanisme de verrouillage est du type bistable, comportant un organe de verrouillage susceptible d'occuper deux positions franches et stables, à savoir une position verrouillée dans laquelle il est susceptible de coopérer avec des moyens de retenue prévus sur le récipient, et une position déverrouillée dans laquelle le couvercle est libre d'être entraîné dans sa position ouverte par les moyens de rappel.

Grâce à ces dispositions, l'ouverture et la fermeture du couvercle sont obtenues par une simple impulsion exercée sur le bouton. Par ailleurs, l'efficacité du verrouillage du couvercle ne dépend pas des valeurs relatives de forces de rappel exercées respectivement sur le couvercle et sur le bouton. En outre, le blocage du couvercle en position fermée est obtenu même si l'utilisateur laisse son doigt sur le bouton, dès lors que l'organe de verrouillage reste bloqué dans sa position verrouillée.

Avantageusement, le bouton occupe la majeure partie de la surface supérieure du couvercle. Il peut donc être plus facilement atteint et actionné par l'utilisateur.

Selon une particularité de l'invention, le couvercle comprend un mécanisme d'amortissement et de ralentissement de l'ouverture du couvercle afin d'obtenir une ouverture du couvercle lente et sans à-coups.

Divers modes de réalisation du couvercle selon l'invention sont décrits ci-après, à titre d'exemple non limitatif, avec référence aux dessins annexés dans lesquels
La figure 1 représente une vue partielle en coupe transversale d'un récipient muni du couvercle selon l'invention, en position fermée, le mécanisme de verrouillage étant en position verrouillée ;
La figure 2 représente une vue partielle en coupe transversale du récipient montré sur la figure 1, le mécanisme de verrouillage étant en position déverrouillée ;
La figure 3 représente une vue partielle en coupe transversale du récipient montré sur la figure 1, le couvercle étant en position ouverte ;
Les figures 4 et 5 sont des vues détaillées en coupe transversale du mécanisme de verrouillage, montré respectivement en position verrouillée et déverrouillée ;
La figure 6 montre une vue partielle en perspective du couvercle selon l'invention, montré dans une position ouverte ;
Les figures 7 et 8 représentent une vue partielle en coupe transversale de deux variantes du couvercle selon l'invention.

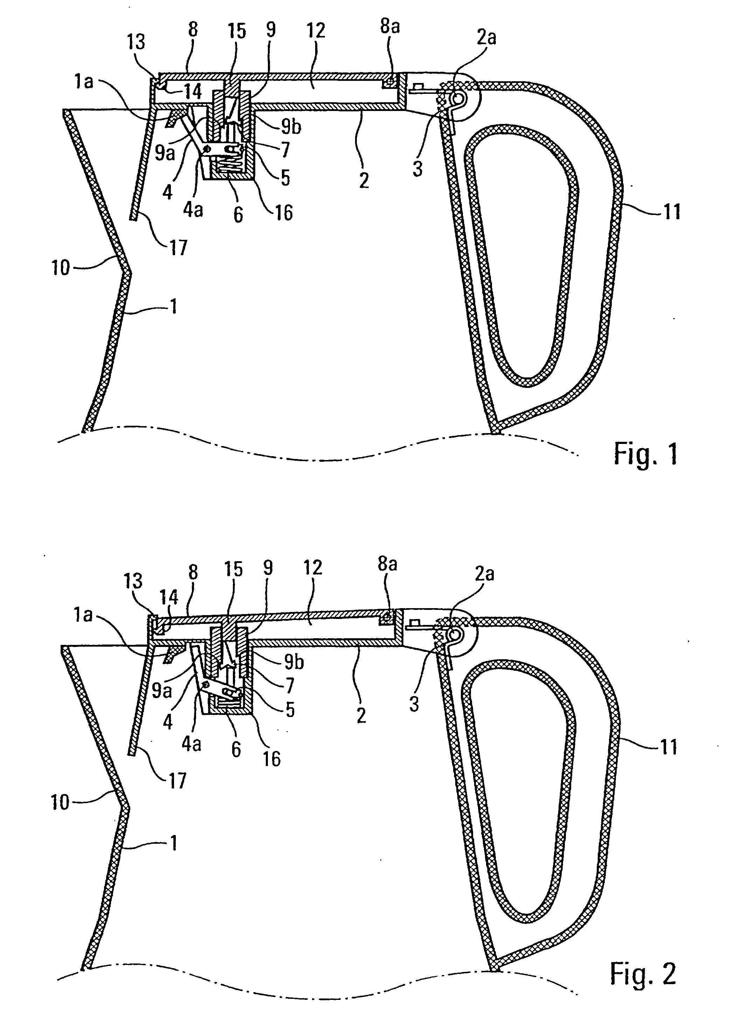

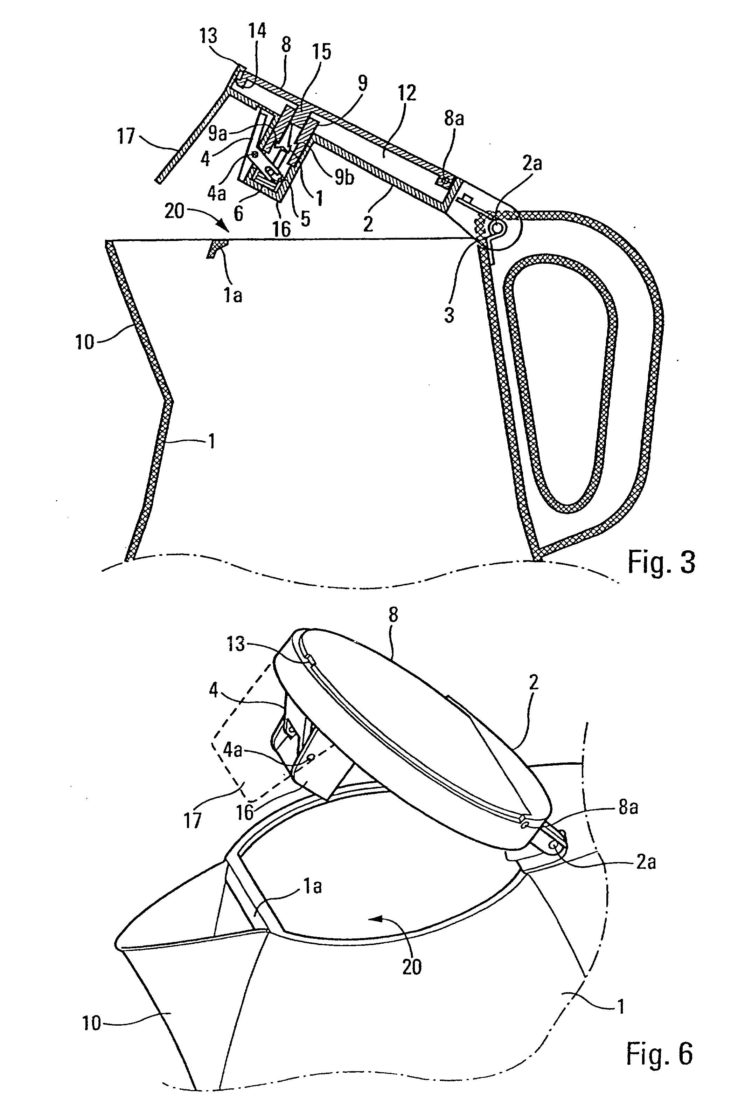

Les figures 1 à 3 représentent un récipient 1 comportant une ouverture supérieure 20 refermée par un couvercle 2, un bec verseur 10 et situé au niveau de l'ouverture, et une poignée 11 située à l'opposé du bec verseur par rapport à l'ouverture. Le couvercle est fixé au récipient 1 de manière à pouvoir pivoter autour d'un axe 2a situé au niveau de la poignée 11, dans le plan de l'ouverture du récipient 1 et perpendiculairement à une ligne reliant la poignée 11 au bec verseur. Le couvercle est poussé dans sa position ouverte par un ressort de rappel 3.

Selon l'invention, le couvercle 2 comprend un bouton poussoir 8 constituant au moins partiellement la face supérieure du couvercle, ce bouton étant monté pivotant sur le couvercle 2 autour d'un axe 8a parallèle à l'axe 2a, le couvercle délimitant une cavité 12 refermée par le bouton 8 et dans laquelle l'extrémité libre du bouton peut s'engager en pivotant autour de l'axe 8a pour prendre une position enfoncée. Le bord du couvercle au voisinage de l'extrémité libre du bouton comprend des moyens de retenue tels qu'un ergot 13 qui coopère avec un décrochement 14 formant crochet, prévu à l'extrémité libre du bouton 8 pour retenir celui-ci et l'empêcher de se dégager de la cavité 12.
Le bouton comprend également un doigt 15 d'actionnement d'un mécanisme de verrouillage du couvercle, formé sur sa face tournée vers la cavité 12.

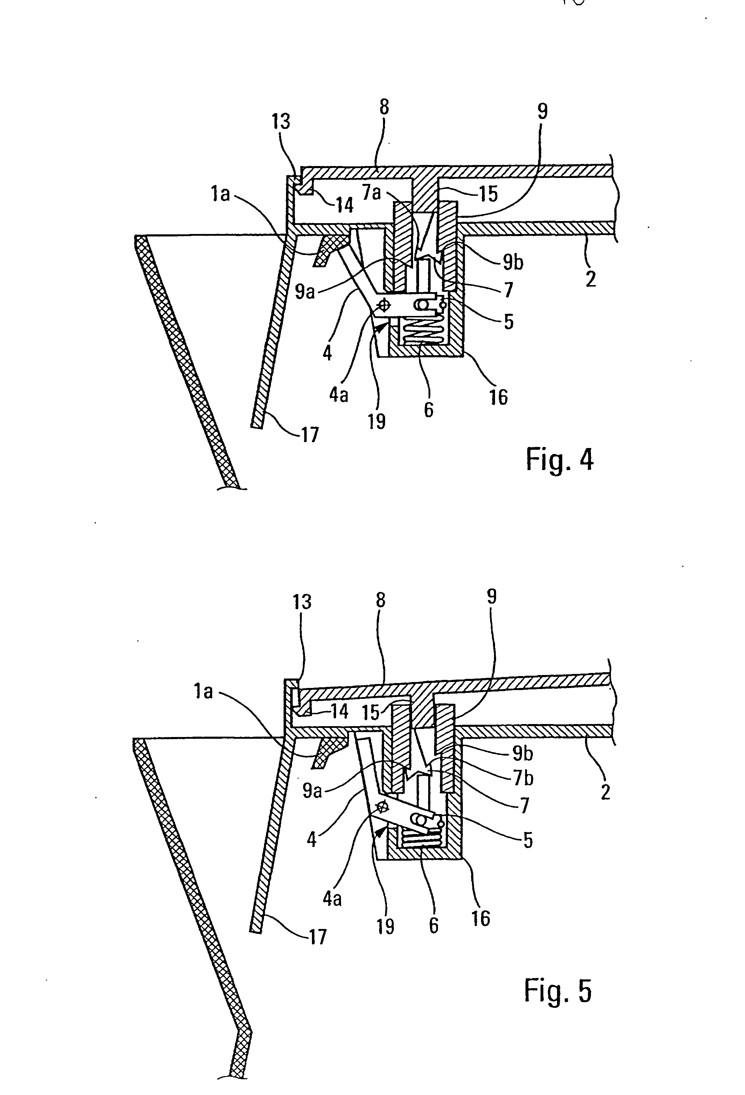

Comme on peut le voir plus en détail sur les figures 4 et 5, le mécanisme de verrouillage est logé dans un boîtier 16 solidaire de la face inférieure du couvercle. Ce boîtier renferme :
- un manchon 9 disposé perpendiculairement au couvercle 2 et dans lequel vient s'engager le doigt 15 du bouton 8,
- un organe de verrouillage 4 en forme de levier, monté pivotant sur le boîtier 16 autour d'un axe 4a parallèle aux axes 2a et 8a, de manière à pouvoir pivoter entre une position de verrouillage et une position déverrouillée,
- des moyens de rappel élastiques tels qu'un ressort 6, par exemple hélicoïdal, disposé coaxialement au manchon 9 et destiné à ramener l'organe de verrouillage dans la position de verrouillage de celui-ci, de manière à autoriser la fermeture et le verrouillage du couvercle 2, 2',22 sur le récipient 1 lorsque l'organe de verrouillage 4, 24 est dans sa position de verrouillage
- un poussoir 5 articulé sur une des extrémités de l'organe de verrouillage 4 et disposé coaxialement au ressort 6, et
- un élément basculant 7 mobile en translation dans le manchon 9, entre le doigt 15 et le poussoir 5.

L'organe de verrouillage 4 en forme de levier comprend, de part et d'autre de son axe de pivotement 4a, un premier bras s'étendant en dehors du boîtier et dont l'extrémité est destinée à coopérer avec une nervure la solidaire du récipient pour verrouiller le couvercle 2 en position fermée sur celui-ci, et un second bras pénétrant dans le boîtier 16 par une ouverture 19, prévue à cet effet, et dont l'extrémité est reliée par une articulation au poussoir 5.

L'élément basculant 7 présente une section sensiblement triangulaire et comprend une face inférieure concave coopérant avec l'extrémité supérieure du poussoir 5 et deux faces latérales convergentes, les parties angulaires de liaison entre la face inférieure et les faces latérales étant prolongées respectivement par deux ergots 7a, 7b destinés à venir coopérer respectivement avec deux dents 9a, 9b formées par des décrochements sur des faces intérieures du manchon 9, situées en regard l'une de l'autre, la dent 9a occupant une position basse dans le manchon, tandis que la dent 9b occupe une position haute relativement à la dent 9a.

Le mécanisme de verrouillage qui vient d'être décrit, peut occuper deux positions stables, à savoir :
- une position de verrouillage dans laquelle le doigt 15 n'est pas engagé dans le manchon 9, et l'élément basculant 7 est bloqué dans une position de verrouillage haute par son ergot 7b engagé sous la dent 9b du manchon, avec l'une de ses faces latérales appliquée contre la face intérieure du manchon située du côté de la dent 9b, le poussoir 5 étant dans une position haute, le ressort 6 détendu et le levier 4 dans sa position de verrouillage (figure 4), et
- une position déverrouillée dans laquelle le bouton 8 est enfoncé, le doigt 15 enfonçant l'élément basculant 7 jusqu'à ce que son ergot 7a s'engage sous la dent 9a, ce qui entraîne son basculement jusqu'à une position dans laquelle son autre face latérale est appliquée contre la face intérieure du manchon située du côté de la dent 9a, le poussoir 5 étant dans une position basse, le ressort 6 comprimé et le levier 4 dans sa position déverrouillée dans laquelle son extrémité libre est dégagée de la nervure la (figure 5).

Il est à noter que si l'on relâche la pression exercée sur le bouton 8, lorsque le mécanisme de verrouillage est dans sa position déverrouillée, l'élément basculant 7 reste bloqué par la dent 9a, ce qui maintient le mécanisme de verrouillage dans cette position. Pour repasser à la position de verrouillage du mécanisme de verrouillage, il suffit d'exercer une légère pression sur le bouton 8 de manière à dégager l'élément basculant 7 de la dent 9a, ce qui a tendance à dégager l'ergot 7a de la dent 9a sous l'effet du poussoir 5 qui coopère avec la forme concave de la face inférieure de l'élément 7. Ensuite, le fait de relâcher le bouton 8 entraîne la remontée de l'élément basculant 7, poussé par le poussoir 5 grâce à l'action du ressort 6, et son basculement lorsque l'ergot 7b vient prendre appui sous la dent haute 9b du manchon 9. Il en résulte que le levier 4 bascule dans sa position de verrouillage, et l'élément basculant 7 vient se bloquer en position haute sous la dent 9b.

Pour ouvrir le récipient, il suffit donc d'appuyer sur le bouton 8 pour l'enfoncer jusqu'à ce que l'ergot 7a de l'élément basculant passe sous la dent 9a, puis de relâcher le bouton, ce qui a pour effet de bloquer le mécanisme de verrouillage dans la position déverrouillée et de dégager le levier 4 de la nervure la, tandis que le couvercle 2 s'ouvre sous l'effet du ressort 3.
A l'inverse, pour refermer le récipient, il suffit d'appuyer sur le bouton 8 pour faire basculer le couvercle jusqu'à sa position fermée, et de prolonger ce mouvement pour enfoncer le bouton dans la cavité 12 et ainsi débloquer le mécanisme de verrouillage. En relâchant ensuite le bouton 8, le mécanisme de verrouillage repasse dans sa position de verrouillage, entraînant le levier 4 à s'engager sous la nervure 1a.

De cette manière, le couvercle du récipient peut être refermé et verrouillé par un unique mouvement continu de pivotement du couvercle effectué en exerçant une pression sur le bouton 8, l'ouverture étant obtenue par une simple impulsion de pression exercée sur le bouton 8 en position fermée.

Il est à noter que si le bouton 8 est manoeuvré pour faire basculer le mécanisme de verrouillage dans sa position de verrouillage, tandis que le couvercle est en position ouverte, le couvercle peut quand même être amené et verrouillé dans sa position de fermeture sur le récipient, puisque le levier 4 peut pivoter au passage de la nervure la en comprimant le ressort 6, sans que l'élément basculant 7 se bloque en position basse.

Le couvercle est solidaire d'une cloison 17 de séparation partielle entre le volume intérieur du récipient et le volume délimité par le bec verseur 10.

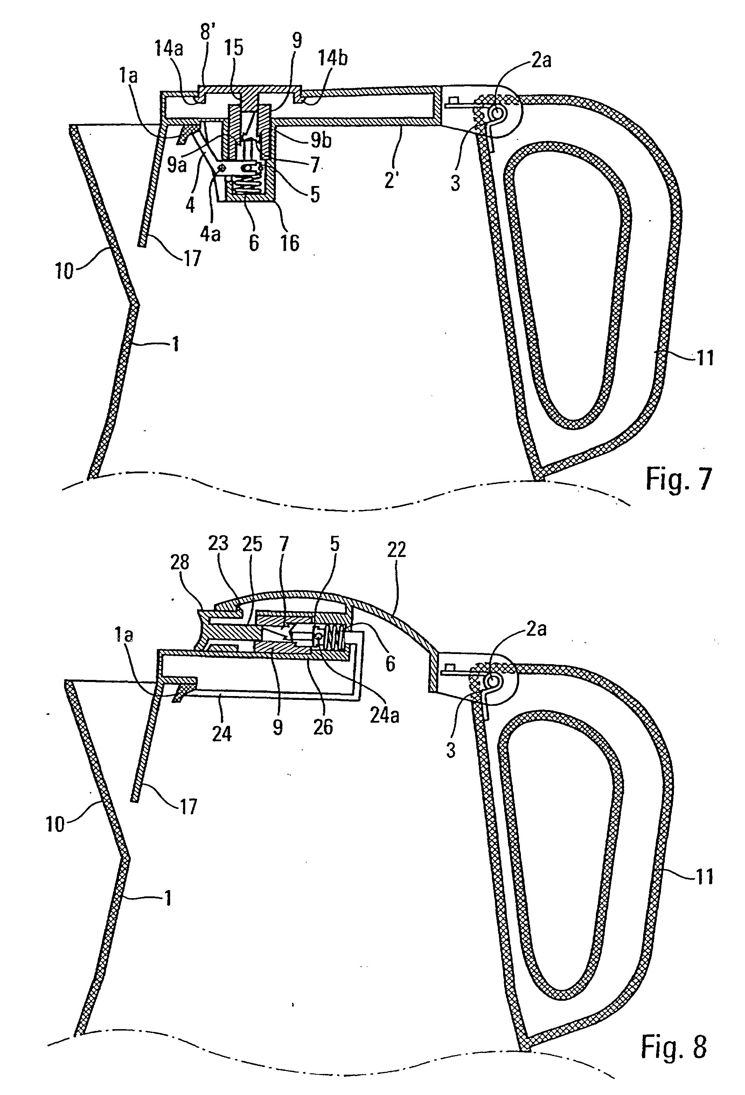

Comme on peut le voir sur la figure 6, le bouton 8 est avantageusement constitué par une plaque qui recouvre la majeure partie du couvercle 2. Bien entendu, le bouton peut prendre n'importe quelle autre forme permettant d'actionner le doigt 15 dans le manchon 9.
Ainsi, comme représenté sur la figure 7, le bouton 8' n'est pas pivotant et occupe une petite portion de la face supérieure du couvercle 2' comprenant une paroi supérieure et une paroi inférieure liées rigidement entre elles. Sur cette figure, le bouton 8' présente un rebord 14a sur l'ensemble de sa périphérie, ou plusieurs rebords 14a, 14b le retenant à l'intérieur du couvercle 2'. Ce bouton actionne au moyen du doigt 15 un mécanisme de verrouillage identique à celui représenté sur les figures 1 à 6.

Sur la figure 8 qui représente une autre variante de l'invention, le couvercle 22 comprend un bouton 28 apte à se déplacer différemment par rapport au mode de réalisation des autres figures où il se déplace suivant un axe sensiblement perpendiculaire au plan du couvercle, mais parallèle ou sensiblement parallèle à celui-ci. Ce bouton comprend donc un doigt d'actionnement 25 également orienté suivant l'axe de déplacement du bouton, et un ergot 23 de blocage du bouton dans le couvercle 22.
Le couvercle 22 dont la paroi supérieure peut être légèrement bombée, comprend également un mécanisme de verrouillage bistable disposé dans un boîtier 26 solidaire du couvercle, ce mécanisme comprenant comme précédemment un manchon 9 renfermant un élément basculant 7, un poussoir 5 et un ressort 6, ces éléments étant identiques à ceux décrits précédemment, mais disposés non pas perpendiculairement au plan du couvercle, mais parallèlement à ce plan. Le poussoir 5 est fixé pivotant autour d'un axe 24a, à un organe de verrouillage 24 comprenant un bras en forme de U dont l'extrémité d'une branche est solidaire de l'axe 24a et l'extrémité de l'autre branche est destinée à venir se bloquer comme précédemment mais par un mouvement de translation et non de pivotement sous la nervure la du récipient. Lorsque le bouton est enfoncé, l'organe de verrouillage 24 se dégage de dessous la nervure la, ce qui provoque l'ouverture du couvercle 22.

A titre de variante, le mécanisme de verrouillage bistable décrit ci-avant peut être remplacé par tout autre mécanisme réalisant cette fonction. Ainsi, ce mécanisme peut être réalisé par un système de roue à rochet, tel que celui que l'on peut trouver dans les stylos à bille, ou encore par un système à came en forme de coeur. On peut également utiliser un système à deux cames enserrant un pion central lors des déplacements de celui-ci.

On peut prévoir également un mécanisme d'amortissement et de ralentissement de l'ouverture du couvercle, apte à obtenir un mouvement lent et sans à-coups.

## Revendications

1. Couvercle de fermeture d'un récipient, susceptible d'être articulé sur celui-ci, et comprenant des moyens élastiques de rappel (3) du couvercle (2, 2', 22) en position ouverte, des moyens de maintien pour être maintenu en position fermée sur le récipient, et un mécanisme de verrouillage pour être maintenu en position fermée sur le récipient et un bouton de commande (8, 8', 28) du mécanisme de verrouillage,
**caractérisé en ce que** le mécanisme de verrouillage est du type bistable, comportant un organe de verrouillage (4, 24), susceptible d'occuper deux positions franches et stables, à savoir une position verrouillée dans laquelle il est susceptible de coopérer avec des moyens de retenue (1a) prévus sur le récipient (1), et une position déverrouillée dans laquelle le couvercle est libre d'être entraîné dans sa position ouverte par les moyens de rappel (3).

2. Couvercle selon la revendication 1,
**caractérisé en ce que** le mécanisme de verrouillage comprend un élément (7) basculant et mobile en translation dans un manchon (9), actionné par le bouton (8, 8', 28), et agissant sur l'organe de verrouillage (4, 24), le manchon (9) comprenant des moyens (9a, 9b) pour bloquer l'élément (7) soit dans une position de verrouillage dans laquelle l'organe de verrouillage est dans sa position de verrouillage, soit dans une position de déverrouillage dans laquelle l'organe de verrouillage est dans sa position déverrouillée.

3. Couvercle selon la revendication 2,
**caractérisé en ce qu'**il comprend des moyens de rappel élastiques (6) destinés à ramener l'élément (7) de sa position de déverrouillage vers sa position de verrouillage, de manière à autoriser la fermeture et le verrouillage du couvercle (2, 2', 22) sur le récipient (1), lorsque l'organe de verrouillage (4, 24) est dans sa position de verrouillage.

4. Couvercle selon l'une des revendications 1 à 3,
**caractérisé en ce qu'**il comprend un mécanisme d'amortissement et de ralentissement de l'ouverture du couvercle (2, 2', 22) apte à obtenir une ouverture du couvercle lente et sans à-coups.

5. Couvercle selon l'une des revendications 1 à 4,
**caractérisé en ce que** le couvercle comprend des moyens de retenue (13, 13a, 13b, 23) pour retenir le bouton (8) et l'empêcher de se dégager du couvercle.

6. Couvercle selon l'une des revendications 1 à 5,
**caractérisé en ce que** le bouton (8) est monté pivotant sur le couvercle (2) autour d'un axe (8a) parallèle à l'axe d'articulation (2a) du couvercle (2) sur le récipient (1).

7. Couvercle selon l'une des revendications 1 à 6,
**caractérisé en ce que** le bouton (8) occupe la majeure partie de la surface supérieure du couvercle (2).

8. Couvercle selon l'une des revendications 1 à 7,
**caractérisé en ce que** le bouton (8,8') se déplace suivant un axe sensiblement orienté perpendiculairement au plan du couvercle (2, 2').

9. Couvercle selon l'une des revendications 1 à 4,
**caractérisé en ce que** le bouton (28) se déplace suivant un axe sensiblement orienté parallèlement au plan du couvercle (22).

## Claims

1. Lid for closing a container, capable of being hinged to the latter, and comprising elastic means (3) for returning the lid (2, 2', 22) to the open position, retention means so that it can be retained in the closed position on the container, and a locking mechanism so that it can be retained in the closed position on the container and a button (8, 8', 28) for operating the locking mechanism,
**characterized in that** the locking mechanism is of bistable type comprising a locking member (4, 24) capable of occupying two separate stable positions, namely a locked position in which it is capable of engaging with holding means (1a) on the container (1), and an unlocked position in which the lid is free to be moved to its open position by the return means (3).

2. Lid according to Claim 1,
**characterized in that** the locking mechanism comprises a pivoting component (7) able to move translationally in a sleeve (9), actuated by the button (8, 8', 28) and acting on the locking member (4, 24), the sleeve (9) comprising means (9a, 9b) for immobilizing the component (7) either in a locked position in which the locking member is in its locked position, or in an unlocked position in which the locking member is in its unlocked position.

3. Lid according to Claim 2,
**characterized in that** it comprises elastic return means (6) designed to move the component (7) from its unlocked position back to its locked position, in such a way that the lid (2, 2', 22) can be closed and locked onto the container (1), when the locking member (4, 24) is in its locked position.

4. Lid according to one of Claims 1 to 3,
**characterized in that** it comprises a mechanism for damping and slowing the opening of the lid (2, 2', 22) so that the lid opens slowly and without bouncing.

5. Lid according to one of Claims 1 to 4,
**characterized in that** the lid comprises holding means (13, 13a, 13b, 23) for holding the button (8) and preventing it from disengaging from the lid.

6. Lid according to one of Claims 1 to 5,
**characterized in that** the button (8) pivots on the lid (2) about an axis (8a) parallel to the hinge axis (2a) of the lid (2) on the container (1).

7. Lid according to one of Claims 1 to 6,
**characterized in that** the button (8) occupies most of the upper surface area of the lid (2).

8. Lid according to one of Claims 1 to 7,
**characterized in that** the button (8, 8') moves on an axis oriented approximately perpendicularly to the plane of the lid (2, 2').

9. Lid according to one of Claims 1 to 4,
**characterized in that** the button (28) moves on an axis oriented approximately parallel to the plane of the lid (22).

## Patentansprüche

1. Verschlussdeckel eines Behälters, der geeignet ist, gelenkig auf diesem befestigt zu sein und elastische Rückstellmittel (3) des Deckels (2, 2', 22) in geöffneter Stellung, Haltemittel, um ihn in Schließstellung auf dem Behälter zu halten, und einen Verriegelungsmechanismus umfasst, um in Schließstellung auf dem Behälter gehalten zu werden, und einen Betätigungsknopf (8, 8', 28) fiir den Verriegelungsmechanismus aufweist,
**dadurch gekennzeichnet, dass** der Verriegelungsmechanismus vom bistabilen Typ ist, der ein Verriegelungsorgan (4, 24) umfasst, das geeignet ist, zwei freie und stabile Stellungen einzunehmen, und zwar eine Verriegelungsstellung, in der es geeignet ist, mit Haltemitteln (1a) zusammenzuwirken, die an dem Behälter vorgesehen sind, und eine Entriegelungsstellung, in der der Deckel freigegeben ist, um durch die Rückstellmittel (3) in seine geöffnete Stellung gebracht zu werden.

2. Deckel nach Anspruch 1, **dadurch gekennzeichnet, dass** der Verriegelungsmechanismus ein in einer Hülse (9) geradlinig verschiebbares Kippelement (7) umfasst, das durch den Knopf (8, 8', 28) betätigt wird und auf das Verriegelungsorgan (4, 24) einwirkt, wobei die Hülse (9) Mittel (9a, 9b) aufweist, um das Element (7) entweder in einer Verriegelungsstellung, in der sich das Verriegelungsorgan in seiner Verriegelungsstellung befindet, oder in einer Entriegelungsstellung, in der sich das Verriegelungsorgan in seiner Entriege 1 ungsste 11 ungbefind, zu arretieren.

3. Deckel nach Anspruch 2, **dadurch gekennzeichnet, dass** er elastische Rückstellmittel (6) aufweist, die dazu gedacht sind, das Element (7) aus seiner Entriegelungsstellung in seine Verriegelungsstellung zurück zu bringen, so dass der Deckel (2, 2', 22) auf dem Behälter (1) verschlossen und verriegelt ist, wenn sich das Verriegelungsorgan (4, 24) in seiner Verriegelungsstellung befindet.

4. Deckel nach einem der Ansprüche 1 bis 3, **dadurch gekennzeichnet, dass** er einen Dämpfungs- und Verlangsamungsmechanismus für das Öffnen des Deckels (2, 2', 22) aufweist, der geeignet ist, ein langsames Öffnen des Deckels ohne plötzlichen Ruck zu gewährleisten.

5. Deckel nach einem der Ansprüche 1 bis 4, **dadurch gekennzeichnet, dass** er Haltemittel (13, 1 3a, 13b, 23) aufweist, die den Knopf (8) festhalten und verhindern, dass er sich von dem Deckel löst.

6. Deckel nach einem der Ansprüche 1 bis 5 **dadurch gekennzeichnet, dass** der Knopf (8) an dem Deckel (2) um eine Achse (8a) drehbar angebracht ist, die parallel zur Gelenkachse (2a) des Deckels (2) auf dem Behälter (1) verläuft.

7. Deckel nach einem der Ansprüche 1 bis 6, **dadurch gekennzeichnet, dass** der Knopf (8) den größten Teil der oberen Fläche des Deckels (2) einnimmt.

8. Deckel nach einem der Ansprüche 1 bis 7, **dadurch gekennzeichnet, dass** sich der Knopf (8, 8') auf einer Achse verschiebt, die im wesentlichen senkrecht zu der Ebene des Deckels (2) ausgerichtet ist.

9. Deckel nach einem der Ansprüche 1 bis 4, **dadurch gekennzeichnet, dass** sich der Knopf (28) auf einer Achse verschiebt, die im wesentlichen parallel zu der Ebene des Deckels (22) ausgerichtet ist.
